# EUROPÄISCHE PATENTANMELDUNG

(11) **EP 3 943 740 A1**
(43) Veröffentlichungstag der Anmeldung: **26.01.2022**
(21) Anmeldenummer: 20186991.4
(22) Anmeldetag: 21.07.2020
(51) Int. Cl.: F02M 35/10, F02M 35/108, F02B 25/22, F02B 33/04, F02B 63/02, F02M 9/08, F02M 19/08, F02M 17/12

(54) **KRAFTSTOFFZUFÜHREINRICHTUNG**

(71) Anmelder: Andreas Stihl AG & Co. KG, 71336 Waiblingen (DE)
(72) Erfinder: Grether, Michael, 71334 Waiblingen (DE); Engel, Bernd, 70186 Stuttgart (DE)
(74) Vertreter: Reinhardt, Annette

(57) **Zusammenfassung**

Eine Kraftstoffzuführeinrichtung (20) weist einen Grundkörper (21) auf, in dem ein Ansaugkanalabschnitt (22) ausgebildet ist. Es ist mindestens ein verstellbares Drosselelement (24) zur Steuerung des freien Strömungsquerschnitts des Ansaugkanalabschnitts (22) vorgesehen. In den Ansaugkanalabschnitt (22) mündet mindestens eine Kraftstofföffnung (23). Stromauf des Drosselelements (24) ist ein Trennwandabschnitt (26) im Ansaugkanalabschnitt (22) angeordnet. Der Trennwandabschnitt (26) und das Drosselelement (24) teilen in vollständig geöffneter Stellung des Drosselelements (24) den Ansaugkanalabschnitt (22) stromauf des Drosselelements (24) in einen Gemischkanal (18), in den die Kraftstofföffnung (23) Kraftstoff zuführt, und in einen Luftkanal (19). Zur Verbesserung der Kühlung der Kraftstoffzuführeinrichtung (20) weist der Trennwandabschnitt (26) mindestens ein Element zur Vergrößerung der Oberfläche innerhalb des Gemischkanals (18) auf.

## Beschreibung

Die Erfindung betrifft eine Kraftstoffzuführeinrichtung der im Oberbegriff des Anspruchs 1 angegebenen Gattung sowie eine Kraftstoffzuführeinrichtung der im Oberbegriff des Anspruchs 2 angegebenen Gattung.

Aus der DE 10 2005 003 559 A1 ist eine Kraftstoffzuführeinrichtung, nämlich ein Vergaser bekannt, der ein verstellbares Drosselelement aufweist. Stromauf des Drosselelements ist ein Trennwandabschnitt im Ansaugkanalabschnitt der Kraftstoffzuführeinrichtung angeordnet, wobei der Trennwandabschnitt und das Drosselelement in vollständig geöffneter Stellung den Ansaugkanalabschnitt in einen Gemischkanal und einen Luftkanal teilen. In vollständig geöffneter Stellung liegt das Drosselelement an dem Trennwandabschnitt an, so dass sich eine Trennung von Luftkanal und Gemischkanal ergibt.

Derartige Kraftstoffzuführeinrichtungen werden üblicherweise dazu eingesetzt, Kraftstoff zu einem Verbrennungsmotor, insbesondere einem Zweitaktmotor zuzuführen. Im Betrieb soll verhindert werden, dass sich in der Kraftstoffzuführeinrichtung Dampfblasen bilden, die eine korrekte Zumessung des zuzuführenden Kraftstoffs beeinträchtigen können. Hierzu ist die Kraftstoffzuführeinrichtung im Betrieb geeignet zu kühlen.

Der Erfindung liegt die Aufgabe zugrunde, eine Kraftstoffzuführeinrichtung der gattungsgemäßen Art zu schaffen, mit der eine effektive Kühlung der Kraftstoffzuführeinrichtung im Betrieb erreicht wird.

Diese Aufgabe wird durch eine Kraftstoffzuführeinrichtung mit den Merkmalen des Anspruchs 1 gelöst. Die Aufgabe wird auch durch eine Kraftstoffzuführeinrichtung mit den Merkmalen des Anspruchs 2 gelöst.

Erfindungsgemäß ist vorgesehen, dass der Trennwandabschnitt mindestens ein Element zur Vergrößerung der Oberfläche innerhalb des Gemischkanals aufweist. Es hat sich gezeigt, dass die Verdampfungsenthalpie, die zur Verdampfung des in den Ansaugkanal zugeführten Kraftstoffs benötigt wird, maßgeblich zur Kühlung der Kraftstoffzuführeinrichtung beiträgt. Die Erfindung sieht nun vor, die Oberfläche innerhalb des Gemischkanals durch mindestens ein Element zur Vergrößerung der Oberfläche zu vergrößern und so einen höheren Grad der Verdampfung im Ansaugkanalabschnitt in der Kraftstoffzuführeinrichtung und dadurch eine verbesserte Kühlwirkung zu erreichen.

Gemäß Anspruch 2 ist vorgesehen, dass der Trennwandabschnitt einteilig mit dem Grundkörper der Kraftstoffzuführeinrichtung ausgebildet ist. Dadurch kann der Grundkörper über den Trennwandabschnitt besonders effektiv gekühlt werden.

Vorteilhaft liegt das Drosselelement in vollständig geöffneter Stellung an dem Trennwandabschnitt an. Das Drosselelement ist vorzugsweise eine Drosselklappe. Es kann jedoch auch vorgesehen sein, dass das Drosselelement walzenförmig ausgebildet ist.

Vorzugsweise ist das Element zur Vergrößerung der Oberfläche einteilig mit dem Trennwandabschnitt ausgebildet. Dadurch ergibt sich eine gute Wärmeleitung zwischen dem mindestens einen Element zur Vergrößerung der Oberfläche und dem Trennwandabschnitt. Ist der Trennwandabschnitt einteilig mit dem Grundkörper ausgebildet, so kann die Wärme gut von dem mindestens einen Element zur Vergrößerung der Oberfläche in den Grundkörper der Kraftstoffzuführeinrichtung übertragen werden und so der Grundkörper effektiv gekühlt werden.

Der Grundkörper der Kraftstoffzuführeinrichtung besteht vorteilhaft aus Aluminium oder aus einer Aluminiumlegierung. In bevorzugter Gestaltung bestehen der Grundkörper und der Trennwandabschnitt aus Aluminium oder aus einer Aluminiumlegierung.

Vorzugsweise ist der Ansaugkanalabschnitt unter Berücksichtigung von Fertigungstoleranzen vollständig in Luftkanal und Gemischkanal getrennt. Bevorzugt schließt der Trennwandabschnitt in vollständig geöffneter Stellung des Drosselelements über mindestens 60%, insbesondere mindestens 70%, vorzugsweise mindestens 90% der Breite des Ansaugkanalabschnitts an das Drosselelement an. Die Breite des Ansaugkanalabschnitts ist dabei an dem Drosselelement gemessen. Vorteilhaft ist zwischen dem Trennwandabschnitt und dem Drosselelement in teilweise und/oder vollständig geschlossener Stellung des Drosselelements eine Öffnung gebildet, die den Luftkanal und den Gemischkanal miteinander verbindet. Dadurch kann im Betrieb im Leerlauf oder in Teillast Kraftstoff/Luft-Gemisch aus dem Gemischkanal in den Luftkanal gelangen und über den Luftkanal dem Verbrennungsmotor zugeführt werden. Dadurch kann ein übermäßiges Abmagern bei niedrigen Drehzahlen vermieden werden.

Das Element zur Vergrößerung der Oberfläche bewirkt vorteilhaft eine Vergrößerung der Umfangslänge, also der in einer Ebene senkrecht zur Längsmittelachse des Ansaugkanalabschnitts gemessenen Länge der Begrenzungswände des Gemischkanals. Das Element zur Vergrößerung der Oberfläche vergrößert die Umfangslänge des Gemischkanals vorzugsweise gegenüber einem Gemischkanal mit ebenem, parallel zur Längsmittelachse des Ansaugkanalabschnitts verlaufendem Trennwandabschnitt.

Das mindestens eine Element zur Vergrößerung der Oberfläche ist bevorzugt in Längsrichtung des Ansaugkanalabschnitts ausgerichtet. Eine nachteilige Beeinflussung der Strömung im Ansaugkanalabschnitt durch das mindestens eine Element zur Vergrößerung der Oberfläche kann dadurch weitgehend vermieden werden.

Bevorzugt sind mehrere Elemente zur Vergrößerung der Oberfläche vorgesehen, die in Querrichtung des Ansaugkanalabschnitts mit Abstand zueinander an dem Trennwandabschnitt angeordnet sind. Der Abstand zwischen benachbarten Elementen zur Vergrößerung der Oberfläche beträgt vorzugsweise etwa 50% bis 200% der Breite eines Elements zur Vergrößerung der Oberfläche. Besonders bevorzugt ist mindestens ein Element zur Vergrößerung der Oberfläche eine Rippe. Auch eine andere Gestaltung des mindestens einen Elements zur Vergrößerung der Oberfläche, beispielsweise eine hügelförmige Gestaltung oder dgl. kann jedoch vorteilhaft sein. Die Höhe des mindestens einen Elements zur Vergrößerung der Oberfläche beträgt vorzugsweise weniger als 20%, insbesondere weniger als 10% des Durchmessers des Ansaugkanalabschnitts an der Chokewelle. Die Breite in Querrichtung des Ansaugkanalabschnitts des mindestens einen Elements zur Vergrößerung der Oberfläche, insbesondere der mindestens einen Rippe, kann dabei konstant über die Länge des Elements sein oder sich über die Länge des Elements ändern. Besonders bevorzugt ist vorgesehen, dass die Breite des mindestens einen Elements zur Vergrößerung der Oberfläche sich in Strömungsrichtung zum Verbrennungsmotor hin vergrößert. Vorteilhaft vergrößern sich Breite und Höhe des mindestens einen Elements zur Vergrößerung der Oberfläche in der gleichen Richtung, insbesondere in Strömungsrichtung zum Verbrennungsmotor hin. Durch die Vergrößerung von Breite und Höhe ist eine leichte Entformung, insbesondere beim Anformen der Rippe am Grundkörper des Vergasers, möglich.

Um eine gute Abfuhr der im Betrieb entstehenden Wärme aus dem Kraftstoffsystem der Kraftstoffzuführeinrichtung zu erreichen, ist besonders bevorzugt vorgesehen, dass der Trennwandabschnitt aus Metall ausgebildet ist. Der Trennwandabschnitt ist vorteilhaft einteilig am Grundkörper der Kraftstoffzuführeinrichtung ausgebildet, insbesondere an diesem einteilig aus Metall angegossen. Dadurch ergibt sich eine vereinfachte Herstellung der Kraftstoffzuführeinrichtung. Auch der Grundkörper besteht vorzugsweise aus Metall.

Um eine gute Ansaugung und Verdampfung von Kraftstoff im Gemischkanal zu erreichen, ist vorteilhaft ein Venturiabschnitt in der Kraftstoffzuführeinrichtung ausgebildet. Besonders bevorzugt ist der Venturiabschnitt im Gemischkanal an dem Trennwandabschnitt ausgebildet. Eine einfache Gestaltung wird erreicht, wenn der dem Trennwandabschnitt gegenüberliegende Abschnitt der Ansaugkanalwand im Gemischkanal keinen oder nur einen wenig ausgebildeten Venturiabschnitt aufweist.

Bevorzugt ist der Venturiabschnitt durch mindestens ein Element zur Vergrößerung der Oberfläche, insbesondere durch mindestens eine Rippe gebildet.

Vorteilhaft ist stromauf des Drosselelements ein verstellbares Chokeelement im Ansaugkanalabschnitt angeordnet. Der Trennwandabschnitt ist vorteilhaft in Strömungsrichtung zwischen einer Chokewelle des Chokeelements und einer Drosselwelle des Drosselelements angeordnet. In vollständig geöffneter Stellung liegt das Chokeelement bevorzugt an dem Trennwandabschnitt an. Besonders bevorzugt liegen in vollständig geöffneter Stellung sowohl das Drosselelement als auch das Chokeelement an dem Trennwandabschnitt an. Dadurch wird bei Volllast durch Drosselelement, Chokeelement und Trennwandabschnitt eine weitgehende, insbesondere eine vollständige Trennung von Luftkanal und Gemischkanal in dem Ansaugkanalabschnitt erreicht. Dadurch ergeben sich für einen mit der Kraftstoffzuführeinrichtung betriebenen Zweitaktmotor geringe Abgaswerte.

Um im Betrieb einen hohen Luftdurchsatz zu erreichen, ist das mindestens eine Element zur Vergrößerung der Oberfläche vorzugsweise so angeordnet, dass es in Strömungsrichtung zum Verbrennungsmotor hinter der Chokewelle oder einem Befestigungselement zur Befestigung des Chokeelements an der Chokewelle angeordnet ist. Vorteilhaft ist das mindestens eine Element zur Vergrößerung der Oberfläche, insbesondere alle Elemente zur Vergrößerung der Oberfläche, bei vollständig geöffnetem Chokeelement und bei Blickrichtung in Richtung der Längsmittelachse vom Chokeelement zum Drosselelement vollständig von einer Chokewelle und einem Befestigungselement zur Befestigung des Chokeelements an der Chokewelle verdeckt. Das Chokeelement ist in dieser Blickrichtung demnach hinter Chokewelle und Befestigungselement nicht sichtbar.

Bevorzugt erstreckt sich das mindestens eine Element zur Vergrößerung der Oberfläche über einen Großteil des Abstands zwischen Drosselelement und Chokewelle. Vorteilhaft beträgt die in Richtung der Längsmittelachse des Ansaugkanalabschnitts gemessene Länge mindestens eines Elements zur Vergrößerung der Oberfläche bei vollständig geöffnetem Drosselelement 70% bis 100% des Abstands des Drosselelements zur Chokewelle an dieser Stelle. Durch die vergleichsweise große Länge des mindestens einen Elements zur Vergrößerung der Oberfläche kann eine gute Kühlwirkung über das mindestens eine Element zur Vergrößerung der Oberfläche erreicht werden.

Die Steuerung der Kraftstoffmenge, die über die Kraftstofföffnung in den Gemischkanal zugeführt wird, kann elektronisch erfolgen, beispielsweise über ein elektromagnetisches Ventil. Alternativ kann die Kraftstoffmenge auch mechanisch, beispielsweise in Abhängigkeit des Drucks in einer Regelkammer, der vorteilhaft über eine Regelmembran eingestellt wird, gesteuert werden.

Der Kraftstoff wird insbesondere in den Gemischkanal eingespritzt. Der Kraftstoffdruck ist dabei höher als der Druck in dem Gemischkanal. Bevorzugt ist vorgesehen, dass der Kraftstoff in Richtung auf den Trennwandabschnitt, vorteilhaft unmittelbar auf den Trennwandabschnitt eingespritzt wird. Es kann jedoch auch vorgesehen sein, dass der Kraftstoff aufgrund des im Gemischkanal herrschenden Unterdrucks in den Gemischkanal angesaugt wird.

Ausführungsbeispiele der Erfindung werden im Folgenden anhand der Zeichnung erläutert. Es zeigen:
- Fig. 1: eine schematische Schnittdarstellung eines Zweitaktmotors mit daran angeordneter Kraftstoffzuführeinrichtung, wobei Drosselelement und Chokeelement vollständig geöffnet sind,
- Fig. 2: einen Schnitt durch die Kraftstoffzuführeinrichtung des Zweitaktmotors aus Fig. 1,
- Fig. 3: einen Schnitt entlang der Linie III-III in Fig. 2,
- Fig. 4 und Fig. 5: ausschnittsweise perspektivische Schnittdarstellungen des Zweitaktmotors aus Fig. 1 im Bereich der Kraftstoffzuführeinrichtung,
- Fig. 6: eine perspektivische Schnittdarstellung durch die Kraftstoffzuführeinrichtung,
- Fig. 7: eine perspektivische Schnittdarstellung durch den Zweitaktmotor im Bereich der Kraftstoffzuführeinrichtung, wobei Drosselelement und Chokeelement vollständig geschlossen sind,
- Fig. 8: einen Schnitt entlang der Linie VIII-VIII in Fig. 2.

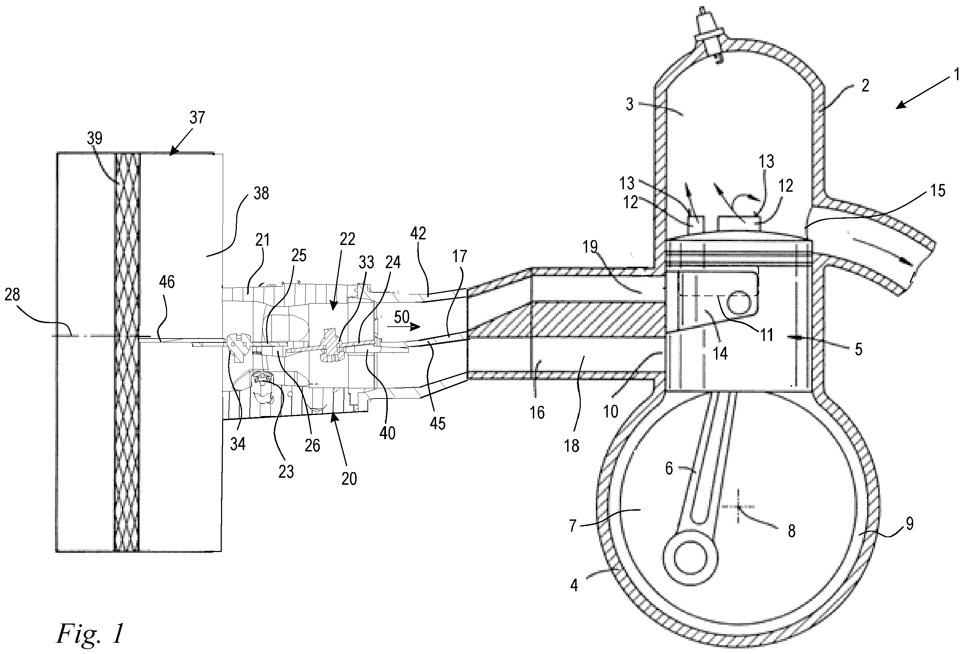

Fig. 1 zeigt schematisch einen Zweitaktmotor 1. Der Zweitaktmotor 1 ist im Ausführungsbeispiel ein Einzylindermotor. Der Zweitaktmotor 1 ist ein mit Spülvorlage arbeitender Zweitaktmotor. Der Zweitaktmotor 1 weist einen Zylinder 2 auf, in dem ein Brennraum 3 ausgebildet ist. Der Brennraum 3 ist von einem Kolben 5 begrenzt, der im Zylinder 2 hin- und hergehend gelagert ist. Der Kolben 5 treibt über ein Pleuel 6 eine in einem Kurbelgehäuse 4 um eine Drehachse 8 drehbar gelagerte Kurbelwelle 7 an.

In alternativer Ausführung kann anstatt des Zweitaktmotors 1 auch ein Viertaktmotor, insbesondere ein gemischgeschmierter Viertaktmotor vorgesehen sein.

Der Zweitaktmotor 1 saugt im Betrieb Kraftstoff/Luft-Gemisch und Luft über einen Luftfilter 37 an. Der Luftfilter 37 weist Filtermaterial 39 auf, das die Umgebung von einem Reinraum 38 des Luftfilters 37 trennt. Im Reinraum 38 mündet ein Ansaugkanal 16 des Zweitaktmotors 1. Der Ansaugkanal 16 ist im Ausführungsbeispiel bis in den Reinraum 38 des Luftfilters 37 über eine Trennwand 17 in einen Gemischkanal 18 und einen Luftkanal 19 getrennt. Zur Zufuhr von Kraftstoff ist eine Kraftstoffzuführeinrichtung 20 vorgesehen, in der ein Ansaugkanalabschnitt 22 des Ansaugkanals 16 ausgebildet ist. Im Ausführungsbeispiel ist die Kraftstoffzuführeinrichtung 20 ein Vergaser. Die Kraftstoffzuführeinrichtung 20 weist einen Grundkörper 21 auf. In dem Grundkörper 21 sind ein Drosselelement 24 und ein Chokeelement 25 schwenkbar gelagert. Im Ausführungsbeispiel sind Drosselelement 24 und Chokeelement 25 als Klappen gestaltet. In alternativer Gestaltung kann vorgesehen sein, dass das Drosselelement 24 und/oder das Chokeelement 25 walzenförmig gestaltet sind.

In der Kraftstoffzuführeinrichtung 20 mündet eine Kraftstofföffnung 23 in den Gemischkanal 18. Der Gemischkanal 18 mündet mit einem Gemischeinlass 10 an der Zylinderbohrung des Zylinders 2. Der Gemischeinlass 18 ist vom Kolben 5 gesteuert. Der Gemischeinlass 18 ist im Bereich des oberen Totpunkts des Kolbens 5 zu einem Kurbelgehäuseinnenraum 9 des Kurbelgehäuses 4 hin geöffnet. Im Bereich des unteren Totpunkts ist der Gemischeinlass 10, wie in Fig. 1 dargestellt, zum Kurbelgehäuseinnenraum 9 hin geschlossen.

Der Luftkanal 19 mündet mit mindestens einem Lufteinlass 11 an der Zylinderbohrung. Auch der Lufteinlass 11 ist vom Kolben 5 gesteuert. Der Kolben 5 weist vorteilhaft mindestens eine Kolbentasche 14 auf, die den Lufteinlass 11 im Bereich des oberen Totpunkts des Kolbens 5 mit mindestens einem Überströmfenster 13 eines Überströmkanals 12 verbindet. Die Überströmkanäle 12 verbinden den Kurbelgehäuseinnenraum 9 fluidisch mit dem Brennraum 3, wenn die Überströmfenster 13 geöffnet sind. Im Ausführungsbeispiel sind auf jeder Seite der Schnittebene aus Fig. 1 zwei Überströmkanäle 12 mit jeweils einem Überströmfenster 13 vorgesehen, die über eine Kolbentasche 14 mit einem Lufteinlass 11 verbunden sind. Aus dem Brennraum 3 führt ein Auslass 15, der ebenfalls vom Kolben 5 gesteuert ist.

Das Drosselelement 24 ist mit einer Drosselwelle 33 schwenkbar gelagert. Das Chokeelement 25 ist mit einer Chokewelle 34 schwenkbar gelagert. In einer Strömungsrichtung 50 zwischen der Chokewelle 34 und der Drosselwelle 33 ist ein Trennwandabschnitt 26 im Ansaugkanalabschnitt 22 angeordnet, der einen Abschnitt der Trennwand 17 bildet und den Luftkanal 19 und Gemischkanal 18 voneinander trennt.

Stromauf der Drosselwelle 34 kann vorteilhaft ein Trennwandabschnitt 46 vorgesehen sein, der einen weiteren Abschnitt der Trennwand 17 bildet. Der Trennwandabschnitt 46 kann einteilig mit dem Gehäuse des Luftfilters 37 ausgebildet oder separat vom Gehäuse des Luftfilters 37 ausgebildet sein.

Stromab der Drosselwelle 33 ist ein Trennwandabschnitt 40 vorgesehen, der einen weiteren Abschnitt der Trennwand 17 bildet und der am Grundkörper 21 gehalten ist. Zwischen der Kraftstoffzuführeinrichtung 22 und dem Zylinder 2 erstreckt sich ein Verbindungsstutzen 42. Der Verbindungsstutzen 42 kann beispielsweise ein elastischer Verbindungsstutzen sein. Am Verbindungsstutzen 42 ist ein Trennwandabschnitt 45 ausgebildet, der Luftkanal 19 und Gemischkanal 18 voneinander trennt und der einen Abschnitt der Trennwand 17 bildet. Wie Fig. 1 auch zeigt, erstreckt sich die Trennwand 17 etwa in Richtung einer Längsmittelachse 28 des Ansaugkanalabschnitts 22. Im Betrieb strömen Luft und Gemisch vom Luftfilter 37 zum Zylinder 2 in einer Strömungsrichtung 50.

Im Betrieb des Zweitaktmotors 1 wird beim Aufwärtshub des Kolbens 5 Kraftstoff/Luft-Gemisch in den Kurbelgehäuseinnenraum 9 angesaugt, sobald der Gemischeinlass 10 vom Kolben 5 geöffnet wird. Sobald die Kolbentasche 14 den Lufteinlass 11 mit dem mindestens einen Überströmfenster 13 verbindet, wird in die Überströmkanäle 12 weitgehend kraftstofffreie Luft angesaugt und in diesen vorgelagert. Beim Abwärtshub des Kolbens 5 wird das Gemisch im Kurbelgehäuseinnenraum 9 verdichtet. Sobald die Überströmfenster 13 vom abwärts fahrenden Kolben 5 geöffnet werden, strömt zunächst in den Überströmkanälen 12 vorgelagerte kraftstofffreie Luft in den Brennraum 3 ein und spült Abgase durch den Auslass 15 aus. Anschließend strömt Frischgemisch aus dem Kurbelgehäuseinnenraum 9 in den Brennraum 3 nach. Beim folgenden Aufwärtshub des Kolbens 5 wird das Gemisch im Brennraum 3 verdichtet und im Bereich des oberen Totpunkts des Kolbens 5 von einer Zündkerze 32 gezündet. Die daraufhin erfolgende Verbrennung beschleunigt den Kolben 5 in Richtung zum Kurbelgehäuseinnenraum 9. Sobald der Auslass 15 vom Kolben 5 geöffnet wird, strömen die Abgase durch den Auslass 15 aus und werden von der durch die Überströmfenster 13 nachströmenden Luft aus den Überströmkanälen 12 ausgespült.

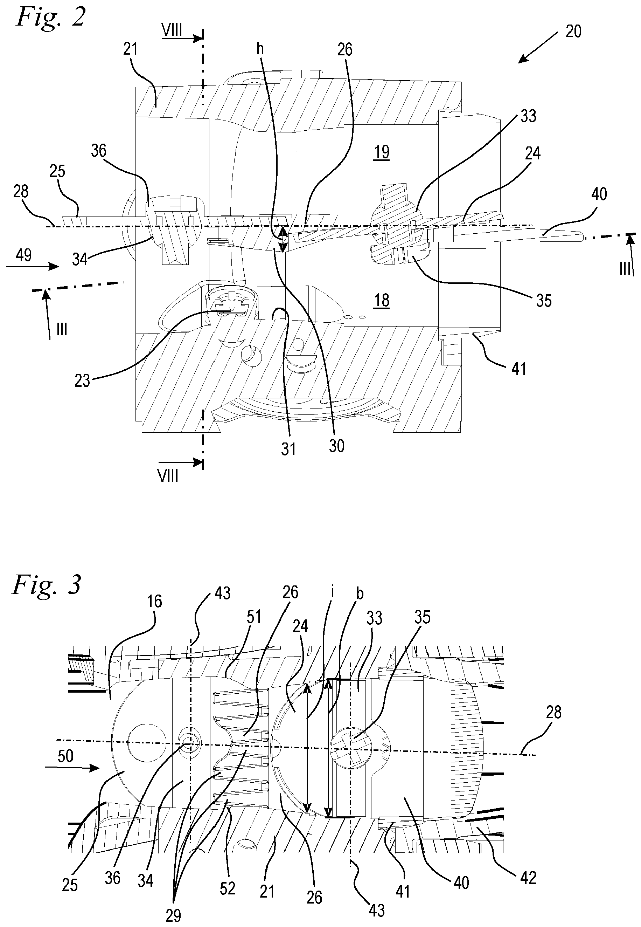

Fig. 2 zeigt die Kraftstoffzuführeinrichtung 20 im Einzelnen. Das Drosselelement 24 ist an der Drosselwelle 33 mit einem Befestigungselement 35 fixiert. Das Chokeelement 25 ist an der Chokewelle 34 mit einem Befestigungselement 36 fixiert. Im Ausführungsbeispiel sind die Befestigungselemente 35 und 36 Befestigungsschrauben. Wie Fig. 2 zeigt, ist am Grundkörper 21 ein Haltering 41 fixiert. Der Haltering 41 ist vorzugsweise in den Grundkörper 21 an der stromab liegenden Seite des Grundkörpers 21 eingepresst. Am Haltering 41 ist vorteilhaft der Trennwandabschnitt 40 ausgebildet. Vorzugsweise sind Haltering 41 und Trennwandabschnitt 40 einteilig miteinander ausgebildet. Fig. 2 zeigt das Drosselelement 24 und das Chokeelement 25 in vollständig geöffneter Stellung. Diese Anordnung entspricht der Anordnung bei Volllast des Zweitaktmotors 1. Das Drosselelement 24 und das Chokeelement 25 liegen vorzugsweise am Trennwandabschnitt 26 an.

In alternativer vorteilhafter Gestaltung kann vorgesehen sein, dass das Drosselelement 24 und/oder das Chokeelement 25 in vollständig geöffneter Stellung nicht am Trennwandabschnitt 26 anliegen. Die vollständig geöffnete Stellung von Drosselelement 24 und/oder Chokeelement 25 kann in diesem Fall durch einen an anderer Stelle angeordneten Anschlag definiert sein. Das Drosselelement 24 liegt vorteilhaft am Trennwandabschnitt 40 an. Alternativ kann vorgesehen sein, dass das Drosselelement 24 nicht am Trennwandabschnitt 40 anliegt.

Der Trennwandabschnitt 26 ist vorzugsweise an der der Kraftstofföffnung 23 gegenüberliegenden Seite verdickt ausgebildet. Der Trennwandabschnitt 26 bildet einen Venturiabschnitt 30.

Der Trennwandabschnitt 26 weist in dem Bereich, in dem das Chokeelement 25 am Trennwandabschnitt 26 anliegt, an der den Gemischkanal 18 begrenzenden Seite eine maximale Höhe h auf. Die Höhe h ist so gewählt, dass der Trennwandabschnitt 26 in einer Blickrichtung 49 von der Chokewelle 34 zur Drosselwelle 33 vorzugsweise vollständig hinter der Chokewelle 34 bzw. dem Befestigungselement 36, mit dem das Chokeelement 25 an der Chokewelle 34 befestigt ist, angeordnet ist. Der Trennwandabschnitt 26 ist von der Chokewelle 34 und dem Befestigungselement 36 verdeckt. Der Abschnitt der Ansaugkanalwand 31, der dem Trennwandabschnitt 26 bzw. dem Venturiabschnitt 30 am Trennwandabschnitt 26 gegenüberliegt, weist vorzugsweise keinen Venturiabschnitt auf.

In vorteilhafter alternativer Gestaltung weist der Abschnitt der Ansaugkanalwand 31, der dem Trennwandabschnitt 26 bzw. dem Venturiabschnitt 30 am Trennwandabschnitt 26 gegenüberliegt, einen nur wenig oder einen vollständig ausgebildeten Venturiabschnitt auf. Ein wenig ausgebildeter Venturiabschnitt ist dabei ein Venturiabschnitt, an dem der Strömungsquerschnitt weniger verringert ist als bei einem Vergaser, an dem der Trennwandabschnitt 26 keinen Venturiabschnitt 30 trägt.

Der Trennwandabschnitt 26 trägt, wie insbesondere Fig. 3 zeigt, mehrere, im Ausführungsbeispiel fünf Rippen 29. Die Rippen 29 sind als Verdickung des Trennwandabschnitts 26 ausgebildet. Im Ausführungsbeispiel bilden die Rippen 29 den Venturiabschnitt 30. Die Rippen 29 sind mit ihrer Längsrichtung parallel zur Längsmittelachse 28 des Ansaugkanalabschnitts 22 ausgerichtet. Wie Fig. 3 zeigt, erstreckt sich der Trennwandabschnitt 26 von einer ersten Längswand 51 des Ansaugkanalabschnitts 22 zu einer gegenüberliegenden zweiten Längswand 52. Der Trennwandabschnitt 26 erstreckt sich demnach in einem Bereich stromauf des Drosselelements 24 über die gesamte Breite des Ansaugkanalabschnitts 22. Stromauf der Drosselwelle 33 erweitert sich der Ansaugkanal 16. Die Breite i des Trennwandabschnitts 26 an ihrer stromab liegenden Seite ist geringfügig kleiner als die an der Mittelachse 43 der Drosselwelle 33 gemessene Breite b des Ansaugkanalabschnitts 22. Daher schließt der Trennwandabschnitt 26 in vollständig geöffneter Stellung des Drosselelements 24 nicht über die gesamte Breite b des Ansaugkanalabschnitts 22 an das Drosselelement 24 an. Vorteilhaft schließt der Trennwandabschnitt 26 in vollständig geöffneter Stellung des Drosselelements 24 über mindestens 60%, vorteilhaft über mindestens 70%, bevorzugt über mindestens 90% der Breite b des Ansaugkanalabschnitts 22 an das Drosselelement 24 an.

Vorzugsweise ist der Trennwandabschnitt 26 einteilig mit dem Grundkörper 21 der Kraftstoffzuführeinrichtung 20 ausgebildet. Der Trennwandabschnitt 26 besteht vorzugsweise aus Metall. Insbesondere ist der Trennwandabschnitt 26 ein Metallgussteil.

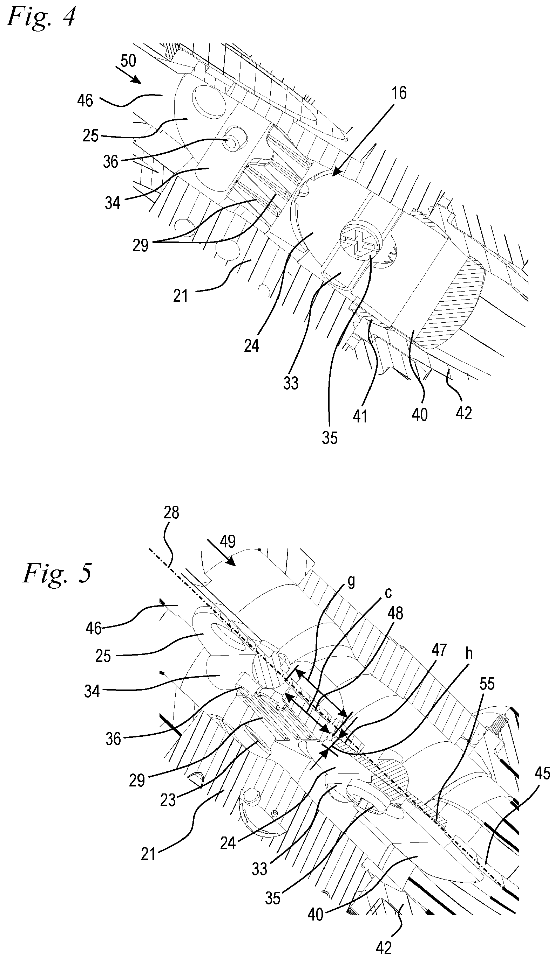

Wie Fig. 3 auch zeigt, verbreitern sich die Rippen 29 vorzugsweise in Richtung der Strömungsrichtung 50. Die Gestaltung der Rippen 29 ist auch in Fig. 4 im Einzelnen dargestellt.

Wie Fig. 5 zeigt, weisen die Rippen 29 eine Länge c auf. Die Länge c beträgt vorzugsweise 70% bis 100% eines Abstands g zwischen dem Drosselelement 24 und der Chokewelle 34, der in vollständig geöffneter Stellung des Drosselelements 24 gemessen ist. Die Länge c und der Abstand g sind dabei parallel zur Längsmittelachse 28 gemessen.

Wie Fig. 5 zeigt, ist die Höhe h des Trennwandabschnitts 26 vorteilhaft so bemessen, dass der Trennwandabschnitt 26 in Blickrichtung des Pfeils 49 vollständig hinter der Chokewelle 34 und dem Befestigungselement 36 für das Chokeelement 25 liegt.

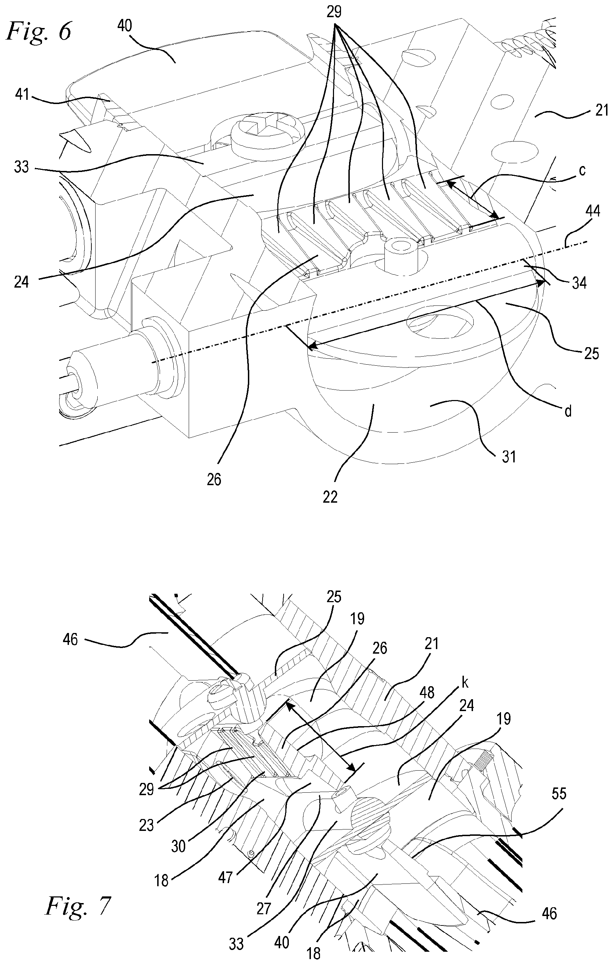

Wie Fig. 6 zeigt, sind im Ausführungsbeispiel fünf Rippen 29 vorgesehen. Die Länge c der Rippen 29 ist kleiner als ein Durchmesser d des Ansaugkanalabschnitts 22. Der Durchmesser d des Ansaugkanalabschnitts 22 ist dabei an einer Mittelachse 44 der Chokewelle 34 gemessen. Der Trennwandabschnitt 26 stromauf der Drosselwelle 33 besitzt eine Länge, die im Ausführungsbeispiel der Länge c der Rippen 29 entspricht. Die Länge k des Trennwandabschnitts 26 (Fig. 7) beträgt vorzugsweise mindestens das 0,5fache des Durchmessers d des Ansaugkanalabschnitts 26 an der Chokewelle 34.

Wie Fig. 7 zeigt, weist der Trennwandabschnitt 26 eine erste Vertiefung 47 an der dem Gemischkanal 18 zugewandten Seite auf. An der gegenüberliegenden Seite weist der Trennwandabschnitt 26 eine zweite Vertiefung 48 auf. Wie Fig. 5 zeigt, liegt das Drosselelement 24 in vollständig geöffneter Stellung in der ersten Vertiefung 47. Das Chokeelement 25 liegt in vollständig geöffneter Stellung in der zweiten Vertiefung 48. Vorteilhaft liegen Chokeelement 25 und Drosselelement 24 in Vollgasstellung vollständig in der zugeordneten Vertiefung 47, 48 und ragen nicht über die Außenseite des Trennwandabschnitts 26 hinaus. Wie Fig. 7 zeigt, weist der Trennwandabschnitt 40 eine dritte Vertiefung 55 auf, in der das Drosselelement 24 in vollständig geöffneter Stellung (Fig. 5) anliegt. Der Boden der dritten Vertiefung 55 ist abgeschrägt ausgebildet, so dass sich eine flächige Anlage des Drosselelements 24 ergibt.

Wie Fig. 7 zeigt, besteht in vollständig geöffneter Stellung des Drosselelements 24 zwischen dem Trennwandabschnitt 26 und der Drosselwelle 33 ein geringfügiger Abstand. Dadurch ist eine Öffnung 27 in der Trennwand 17 gebildet. Im Leerlauf und in niedriger Teillast, wenn das Drosselelement 24 weitgehend oder vollständig geschlossen ist, kann dadurch Kraftstoff aus dem Gemischkanal 18 in den Luftkanal 19 übertreten.

Dadurch wird ein übermäßiges Abmagern im Leerlauf und bei niedriger Teillast verhindert.

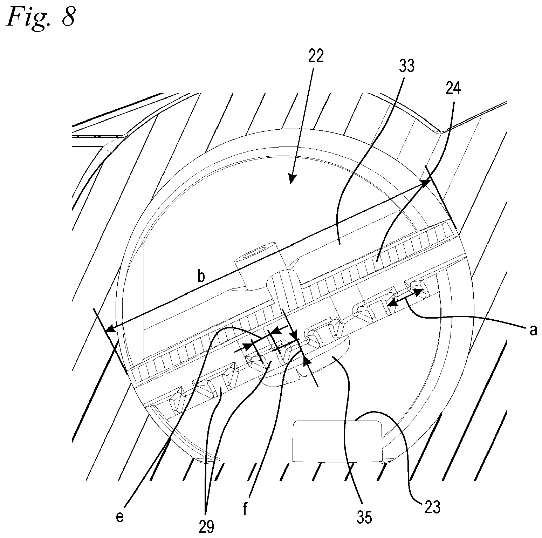

Fig. 8 zeigt die Gestaltung der Rippen 29 im Einzelnen. Die Rippen 29 weisen eine in Querrichtung des Ansaugkanalabschnitts 22 gemessene Breite e sowie eine senkrecht zur Breite e und senkrecht zur Fläche des Trennwandabschnitts 26 gemessene Höhe f auf. Benachbarte Rippen 29 weisen einen Abstand a zueinander auf. Die Breite e und der Abstand a sind parallel zur Mittelachse 44 der Chokewelle 34 (Fig. 6) und parallel zu einer Mittelachse 43 der Drosselwelle 33 gemessen. Die Höhe f ist senkrecht zu den Mittelachsen 43 und 44 und senkrecht zur Längsmittelachse 28 gemessen. Die Mittelachsen 43 und 44 sind auch in Fig. 3 gezeigt. Die Breite b der Rippen 29 nimmt in Strömungsrichtung 50 zu, wie insbesondere auch Fig. 3 zeigt. Dadurch verringert sich der Abstand a zwischen benachbarten Rippen 29 in Strömungsrichtung 50. Im Ausführungsbeispiel vergrößert sich auch die Höhe h der Rippen 29 in Strömungsrichtung 50. Dadurch kann eine strömungsgünstige Form für den Venturiabschnitt 30 erreicht werden. Gleichzeitig ist eine einfache Entformung des Grundkörpers 21 bei der Herstellung des Grundkörpers mit daran angeformtem Trennwandabschnitt 26 und daran angeformten Rippen 29 im Metallguss gewährleistet.

Die Höhe h der Rippen 29 beträgt vorzugsweise weniger als 20%, insbesondere weniger als 10% des Durchmessers d des Ansaugkanalabschnitts 22 an der Chokewelle 34. Der Abstand a zwischen benachbarten Rippen 29 beträgt vorzugsweise 50% bis 200% der Breite e einer Rippe 29.

Die Kraftstofföffnung 23 ist gegenüberliegend zu den Rippen 29 im Ansaugkanalabschnitt 22 angeordnet. Wie insbesondere Fig. 2 zeigt, ist die Kraftstofföffnung 23 unmittelbar stromab der Chokewelle 34 angeordnet. Die Kraftstofföffnung 23 ist benachbart zu der in Strömungsrichtung 50 stromauf liegenden Seite des Trennwandabschnitts 26 angeordnet. Der Trennwandabschnitt 26, an dem das mindestens eine Element zur Vergrößerung der Oberfläche angeordnet ist, ist in Umfangsrichtung vorzugsweise geschlossen. Der Trennwandabschnitt 26 ist vorzugsweise einteilig mit dem Grundkörper 21 ausgebildet. Es kann jedoch auch vorgesehen sein, dass der Trennwandabschnitt 26 separat vom Grundkörper 21 ausgebildet und an diesem fixiert, insbesondere in diesen eingepresst ist. Kraftstoff, der aus der Kraftstofföffnung 23 austritt, kann sich unmittelbar an dem Trennwandabschnitt 26 niederschlagen und hier verdunsten. Aufgrund der Elemente zur Vergrößerung der Oberfläche ist die Kraftstoffmenge, die sich niederschlagen kann, vergleichsweise groß. Die durch die Verdunstung erzeugte Verdunstungskälte kühlt den Trennwandabschnitt 26 und den mit diesem einteilig ausgebildeten Grundkörper 21.

## Patentansprüche

1. Kraftstoffzuführeinrichtung mit einem Grundkörper (21), in dem ein Ansaugkanalabschnitt (22) ausgebildet ist, mit mindestens einem verstellbaren Drosselelement (24) zur Steuerung des freien Strömungsquerschnitts des Ansaugkanalabschnitts (22), wobei in den Ansaugkanalabschnitt (22) mindestens eine Kraftstofföffnung (23) mündet, wobei stromauf des Drosselelements (24) ein Trennwandabschnitt (26) im Ansaugkanalabschnitt (22) angeordnet ist, wobei der Trennwandabschnitt (26) und das Drosselelement (24) in vollständig geöffneter Stellung des Drosselelements (24) den Ansaugkanalabschnitt (22) stromauf des Drosselelements (24) in einen Gemischkanal (18), in den die Kraftstofföffnung (23) Kraftstoff zuführt, und einen Luftkanal (19) teilen, wobei das Drosselelement (24) in vollständig geöffneter Stellung an dem Trennwandabschnitt (26) anliegt,
**dadurch gekennzeichnet, dass** der Trennwandabschnitt (26) mindestens ein Element zur Vergrößerung der Oberfläche innerhalb des Gemischkanals (18) aufweist.

2. Kraftstoffzuführeinrichtung mit einem Grundkörper (21), in dem ein Ansaugkanalabschnitt (22) ausgebildet ist, mit mindestens einem verstellbaren Drosselelement (24) zur Steuerung des freien Strömungsquerschnitts des Ansaugkanalabschnitts (22), wobei in den Ansaugkanalabschnitt (22) mindestens eine Kraftstofföffnung (23) mündet, wobei stromauf des Drosselelements (24) ein Trennwandabschnitt (26) im Ansaugkanalabschnitt (22) angeordnet ist, wobei der Trennwandabschnitt (26) und das Drosselelement (24) in vollständig geöffneter Stellung des Drosselelements (24) den Ansaugkanalabschnitt (22) stromauf des Drosselelements (24) in einen Gemischkanal (18), in den die Kraftstofföffnung (23) Kraftstoff zuführt, und einen Luftkanal (19) teilen,
**dadurch gekennzeichnet, dass** der Trennwandabschnitt (26) einteilig mit dem Grundkörper (21) ausgebildet ist und dass der Trennwandabschnitt (26) mindestens ein Element zur Vergrößerung der Oberfläche innerhalb des Gemischkanals (18) aufweist.

3. Kraftstoffzuführeinrichtung nach Anspruch 2,
**dadurch gekennzeichnet, dass** das Drosselelement (24) in vollständig geöffneter Stellung an dem Trennwandabschnitt (26) anliegt.

4. Kraftstoffzuführeinrichtung nach einem der Ansprüche 1 bis 3,
**dadurch gekennzeichnet, dass** das Element zur Vergrößerung der Oberfläche einteilig mit dem Trennwandabschnitt (26) ausgebildet ist.

5. Kraftstoffzuführeinrichtung nach einem der Ansprüche 1 bis 4,
**dadurch gekennzeichnet, dass** der Grundkörper (21) aus Aluminium oder einer Aluminiumlegierung besteht.

6. Kraftstoffzuführeinrichtung nach einem der Ansprüche 1 bis 5,
**dadurch gekennzeichnet, dass** der Trennwandabschnitt (26) in vollständig geöffneter Stellung des Drosselelements (24) über mindestens 60% der Breite (b) des Ansaugkanalabschnitts (22) an das Drosselelement (24) anschließt.

7. Kraftstoffzuführeinrichtung nach einem der Ansprüche 1 bis 6,
**dadurch gekennzeichnet, dass** zwischen dem Trennwandabschnitt (26) und dem Drosselelement (24) in teilweise und/oder vollständig geschlossener Stellung des Drosselelements (24) eine Öffnung (27) gebildet ist, die den Luftkanal (19) und den Gemischkanal (18) miteinander verbindet.

8. Kraftstoffzuführeinrichtung nach einem der Ansprüche 1 bis 7,
**dadurch gekennzeichnet, dass** das Element zur Vergrößerung der Oberfläche die Umfangslänge des Gemischkanals (18) gegenüber einem Gemischkanal (18) mit ebenem, parallel zur Längsmittelachse (28) des Ansaugkanalabschnitts (22) verlaufendem Trennwandabschnitt (26) vergrößert.

9. Kraftstoffzuführeinrichtung nach einem der Ansprüche 1 bis 8,
**dadurch gekennzeichnet, dass** das Element zur Vergrößerung der Oberfläche in Längsrichtung des Ansaugkanalabschnitts (22) ausgerichtet ist.

10. Kraftstoffzuführeinrichtung nach einem der Ansprüche 1 bis 9,
**dadurch gekennzeichnet, dass** mehrere Elemente zur Vergrößerung der Oberfläche vorgesehen sind, die in Querrichtung des Ansaugkanalabschnitts (22) mit Abstand (a) zueinander an dem Trennwandabschnitt (26) angeordnet sind.

11. Kraftstoffzuführeinrichtung nach einem der Ansprüche 1 bis 10,
**dadurch gekennzeichnet, dass** mindestens ein Element zur Vergrößerung der Oberfläche eine Rippe (29) ist.

12. Kraftstoffzuführeinrichtung nach einem der Ansprüche 1 bis 11,
**dadurch gekennzeichnet, dass** der Trennwandabschnitt (26) aus Metall ausgebildet ist.

13. Kraftstoffzuführeinrichtung nach einem der Ansprüche 1 bis 12,
**dadurch gekennzeichnet, dass** im Gemischkanal (18) an dem Trennwandabschnitt (22) ein Venturiabschnitt (30) ausgebildet ist.

14. Kraftstoffzuführeinrichtung nach Anspruch 13,
**dadurch gekennzeichnet, dass** der Venturiabschnitt (30) durch mindestens ein Element zur Vergrößerung der Oberfläche, insbesondere durch mindestens eine Rippe (29), gebildet ist.

15. Kraftstoffzuführeinrichtung nach einem der Ansprüche 1 bis 14,
**dadurch gekennzeichnet, dass** stromauf des Drosselelements (24) ein verstellbares Chokeelement (25) im Ansaugkanalabschnitt (22) angeordnet ist, und dass der Trennwandabschnitt (26) in Strömungsrichtung zwischen einer Chokewelle (34) des Chokeelements (25) und einer Drosselwelle (33) des Drosselelements (24) angeordnet ist.

16. Kraftstoffzuführeinrichtung nach Anspruch 15,
**dadurch gekennzeichnet, dass** das Chokeelement (25) in vollständig geöffneter Stellung an dem Trennwandabschnitt (26) anliegt.

17. Kraftstoffzuführeinrichtung nach Anspruch 15 oder 16,
**dadurch gekennzeichnet, dass** das mindestens eine Element zur Vergrößerung der Oberfläche, insbesondere alle Elemente zur Vergrößerung der Oberfläche bei vollständig geöffnetem Chokeelement (25) und bei Blickrichtung in Richtung der Längsmittelachse (28) vom Chokeelement (25) zum Drosselelement (24) vollständig von einer Chokewelle (34) und einem Befestigungselement (36) zur Befestigung des Chokeelements (25) an der Chokewelle (34) verdeckt ist.

18. Kraftstoffzuführeinrichtung nach einem der Ansprüche 15 bis 17,
**dadurch gekennzeichnet, dass** die in Richtung der Längsmittelachse (28) des Ansaugkanalabschnitts (22) gemessene Länge (c) mindestens eines Elements zur Vergrößerung der Oberfläche bei vollständig geöffnetem Drosselelement (24) 70% bis 100% des Abstands (d) des Drosselelements (24) zur Chokewelle (34) an dieser Stelle entspricht.
